# EUROPEAN PATENT SPECIFICATION

(11) **EP 1 386 470 B1**
(45) Date of publication and mention of the grant of the patent: **18.10.2006**
(21) Application number: 02745259.8
(22) Date of filing: 23.04.2002
(51) Int. Cl.: H04L 29/08

(54) **ARCHITECTURE FOR PROVIDING SERVICES IN THE INTERNET**
ARCHITEKTUR ZUR BEREITSTELLUNG VON INTERNETDIENSTEN
ARCHITECTURE POUR FOURNIR DES SERVICES SUR INTERNET

(30) Priority: 23.04.2001 EP 01201460; 08.06.2001 US 297078 P; 07.11.2001 EP 10154546; 13.11.2001 EP 01204327; 13.03.2002 EP 02076008
(43) Date of publication of application: 04.02.2004
(73) Proprietor: Koninklijke KPN N.V., 9726 AE Groningen (NL)
(72) Inventor: ERGEZINGER, Siegried, 40489 Mettmann (DE); KEISINGER, 40489 Düsseldorf (DE); THIERBACH, Heiko, 90480 Nürnberg (DE); HERZLINGER, Alexander, 63486 Bruchkobel (DE)
(74) Representative: Wuyts, Koenraad Maria
(86) International application number: PCT/EP2002/004518
(87) International publication number: WO 2002/102016

(56) References cited:
- WO-A-98/21874
- WO-A-99/31610
- "wap white paper" AU SYSTEM RADIO, FEBRUARY 1999, February 1999 (1999-02), pages 1-22, XP002901226

## Description

### Field of the invention

The invention relates to a system for and a method of providing services through a wide area network, in particular the Internet, to user terminals. The invention relates especially, but is not limited to, providing such services to mobile terminals gaining access to the network through a telecom access provider.

### Background of the invention

Services in wide area networks, especially on the Internet, are usually accessed via an access provider, who gives the user access to the entire Internet including each service provider selected by a user. The user terminal communicates with the access provider via an access connection/network. Usually, such an access connection consists of a direct telephone connection (fixed or, increasingly, mobile) or a broadband shared access connection (such as cable or satellite). The access provider passes messages from the user terminal, such as a service request, on to the involved service provider and passes messages from the service provider on to the user terminal. The service may be delivered in the form of digital content, such as MP3 audio, MPEG4 video, or software through the Internet, but may also result in the delivery of a physical product (e.g. the product/service ordered through Internet shopping or obtained through a successful participation in an Internet auction), or any other form. In those cases where not the entire service is provided through the Internet, the term 'service providing' in the context of the Internet is meant the Internet interaction that causes the service/product to be delivered. The user has to subscribe to the access provider (although the subscription in itself may be free, or paid for through a rebate arrangement of the access provider with the telecommunication provider of the access connection). The user, via the user terminal, has to log into the access system of the access provider that checks whether the account name and password correspond to a registered subscription. If so, the access provider usually provides full access to the Internet. Many service providers require the user also to register and each time to log-in when the user wishes to use a service supplied by the service provider. This is particularly the case if the user wishes to use a payable service, like Internet shopping.

With the arrival of an increasing number and diversity of user terminals, including desktop PCs, laptop PCs, mobile phones, PDAs, of which some are less sophisticated than conventional computer-based terminals, and the increase in the number of paid services the traditional architecture as described above is stretched to its limits. Particular areas of concern are security with respect to privacy and billing, as well as ease of use.

### Summary of the invention

It is an object of the invention to provide an improved architecture for providing services through a wide area network, in particular the Internet.

To meet this object of the invention, the system for providing services to a user terminal includes at least one service access provider subsystem (hereinafter "access provider") including a communication interface for communicating to at least one service/content provider subsystem (hereinafter "service provider") via a wide area network, in particular Internet, and for communicating to at least one user terminal via a further communication system; wherein the access provider includes a service access manager (230) for verifying whether a user terminal or a user of a user terminal (hereinafter "user (terminal)") is authorized to request a service from a service provider and upon positive verification enabling the user terminal to access the service provider, thereby relieving the service provider from having to authorize the user (terminal); and optionally at least one service provider for providing services via the wide area network including a communication interface for communicating to the wide area network; and optionally at least one user terminal including a communication interface for communicating to the access provider via the further communication system and, through the access provider, requesting services from at least one service provider.

The access provider can include a service access manager that verifies whether a user is authorized to use the service of the involved service provider (or of all service providers). This relieves the service providers from having to perform such an authorization individually. It will be appreciated that the authorization may also be based on authorizing the user terminal used by the user instead of authorizing the user. For instance, any body using an authorized mobile phone may access certain (or all) services. This level of access may depend on the type of customer (e.g. prepaid or postpaid) or subscription type. In the remainder, reference will be made to "user (terminal)" where access may be granted to a user of a user terminal or to the user terminal itself. By using a central access management for controlling access to the services, the access control can be made more sophisticated (e.g. optimized for different types of terminals or users) and better use can be made of information available in the access network without complicating the service providers and without raising costs for the service providers. This keep the threshold for service providers to provide paid or personalized services low. Preferably, the access network is a mobile telecommunications network that is able to provide sophisticated information to the access provider. The architecture according to the invention provides the user the benefit of only having to register/subscribe to and getting authorized by one access provider with whom the user can maintain a long-term relationship. It relieves the user from having to provide confidential details to many service providers, of whom the user does not know whether they can be relied upon.

The service can be any kind of existing or future service that can be obtained via a user terminal, such as a mobile telephone. This includes SMS, Hi site SMS, WAP, banking services, credit services, on-site payment for services (e.g. parking lot) or products (e.g. drinks dispenser). The service furthermore can include information about the weather forecast, traffic information, horoscope predictions, sweepstake information, flight information, financial and exchanges information, cultural and social events, nightlife in a city, etc. The service provider system of the invention can be used in combination of any form of access network, but preferably a mobile communications technology such as UMTS, GSM, WAP, GPRS, or any future mobile communications technology, and the system may use any protocol such as XML or mobile html or UCP or other protocols. A user may request a service, which may be delivered in the form of a page, preferably an XML or HTML or similar page. Where required, the service may be delivered by the service provider to the customer without a request of the customer or may be delivered on a regular basis ('subscription') based on a first request for content from the customer.

In an embodiment according to the invention, the access manager is arranged to execute a log-in operation of the user of the user terminal and, upon successful completion of the log-in operation, starting a communication session enabling verified access of the user terminal to the service provider during the session. After successful completion of the log-in operation, the user (terminal) has in principle gained authorized access to at least one, but preferably all service providers cooperating in the system. It will be appreciated that certain services do not require authorization/identification (e.g. the service is free and not personalized). The access manager can provide access to this category of service providers without further authorization/identification. Preferably, the standard log-in procedure executed by access providers for granting a terminal access to the wide area network is adapted to also cover the procedure for granting access to the service providers. In this way, one authorization procedure gives a user access to the network in general (e.g. for receiving emails, and using free web-based services) as well as to use personalized or paid services. No registering/subscribing at the various service providers is required any more. Moreover, the one subscription and authorization procedure at the physical access provider is sufficient to also cover getting access at the service level. The adapted procedure may need to be more secure than the conventional procedure performed by access providers that provide general access. The security level can, for example, be chosen dependent on the level of personal details involved (protecting the privacy of the user) or the costs of the services. To this end, the login procedure may need to be executed via a secured connection or be using authorized hardware (e.g. based on encryption techniques) in the terminal and access provider.

In an embodiment according to the invention, the first communication interface of the access provider and the communication interface of the service provider are arranged to secure at least part of the communication between the access provider and the service provider. The secure connection is preferably used for informing the service provider that a user (terminal) wishing to use the service provider has been authorized. This increases the security of transferring the authorization from the service provider to the central access manager.

In an embodiment according to the invention, a service may comprise downloadable objects. Objects may be graphical images, pictures, movies, sounds or texts. Some of these objects may be billable to the user whilst other objects may be free of charge. These objects may be embedded in a requested HTML page, which may contain billable and free objects. In this document, both the downloadable objects and the pages containing them are referred to as services.

In an embodiment according to the invention, the access manager is arranged to verify a solvency associated with the user (terminal) with respect to costs associated with obtaining the service and only upon positive solvency verification enabling access to the service provider. The conventional administration of the physical access provider for subscriptions to get access to the Internet can now advantageously also be used for verifying the solvency of a user for accessing services, in particular paid services (services that are only provided on the condition that a payment is made before the actual delivery takes place as well as services that may involve payment at a later stage).

In another embodiment according to the invention, the access manager is arranged to verify a solvency after delivery of the service to the access manager, but prior to delivery to the user terminal. The advantage of this embodiment is that a service request may be handled faster.

In an embodiment according to the invention, the access manager is arranged to generate a billing record for billing the costs upon positive verification of the solvency. The access manager ensures that the actual billing takes place on behalf of the service providers. To this end, the access manager may have an arrangement with the user or cash the money via intermediate financial institutes, such as credit card companies. The billing records may be forwarded to such institutions or companies. Traditionally, the access provider only did the billing for the access network (usually based on a subscription fee and/or the use of the telephone line). The costs involved in actually using services in the Internet was very unclear to a user. In the architecture according to the invention, the billing for all services can be combined by the service access provider. Preferably, billing for the services is also combined with billing for providing physical access, providing the user a very clear picture of all costs involved in using the Internet. Advantageously, the balance for using Internet is settled via the telecommunication service provider that provides the access network, such as a mobile network. This substantially reduces the number of accounts that a user needs to have, and as such reduces the chance of misuse of the system.

Preferably, billing is performed using a payment/billing server arranged to perform validation of the customer's request and payment and/or billing for the content service. This payment/billing server is preferably using a database, comprising customer data such as type of customer: (postpaid or prepaid); subscriber accounts: billing information (for postpaid customers) and prepaid account information (for prepaid customers). Thus the term billing data is to be understood as comprising data about the type of customer (postpaid or prepaid) and about the actual prepaid balance or the account information of the customer.

In an embodiment according to the invention, the access manager is arranged to verify whether the requested service or the downloadable objects associated with that service has been supplied by the service provider to the user (terminal) and to only perform the billing upon confirmation of the delivery. For services/content delivered electronically through the access provider, the access provider can simply check that all electronic content has been delivered to the user (terminal). If the service is not delivered through the service provider, the service provider may need to confirm the delivery to the access provider. Preferably, in the period between requesting the service and confirmation of the delivery, the access manager arranges that the involved money is reserved on behalf of the service provider.

In an embodiment according to the invention, the access provider includes a storage for storing electronic content supplied by a service provider in response to a service request of a user (terminal) for onward supply to the user (terminal); the access manager being arranged to repeat delivery to the user upon a failure to retrieve the electronic content by the user (terminal) on a first attempt. To increase the reliability of delivery of electronic content, the access provider stores content delivered by the service provider for subsequent retrieval by the user (terminal). This reduces the chance that the user has paid for a service delivered by the service provider but actually never received by the user, due to failures in the access provider or access network.

In an embodiment according to the invention, the access manager is arranged to verify a solvency associated with the user (terminal) in dependence on a type of user each with different billing data. At the same time different network operators may operate on the access manager, each operator having its own user types and billing data associated with that. This enables customer-oriented providing of services, where the user may choose a payment form that suits him best. Preferably, a distinction is made between subscription and non-subscription customers. For non-subscription customers, preferably a further distinction is made between pre-paid and post-paid customers. The customer's billing data includes data about the type of customer (prepaid or postpaid), and/or data about the account of said customer, and/or data about the subscriber account of said customer. The billing data is supplied by the user (terminal) in a service request or stored in the access provider in association with the user (terminal). For prepaid customers, the actual billing of the customer can include withdrawal of the required sum from the customer's account. For a postpaid customer the billing may include withdrawal of the required sum from an m-commerce (mobile commerce) account. Preferably, the billing also covers the costs of the transport of the content.

In an embodiment according to the invention, the user (terminal) is associated with identifying information that is included in at least one request message to a service provider to enable the service provider to supply the service to the user (terminal); the access provider including: a storage (240) for storing for each user (terminal) associated fictitious identifying information; and an identity converter (260) for replacing in a service request message from the user terminal the identifying information with a corresponding fictitious identifying information forwarded to the service provider and for replacing in a service response message from the service provider the fictitious identifying information by the corresponding (user) terminal identifying information. The identity of the user (terminal) requesting the service is hidden from the service provider by the access provider replacing the identity with a fictitious identity. This significantly reduces the chance of privacy sensitive information being misused by service providers. Since it is no longer necessary to pass on many personal details via the Internet, the chance of interception of such information by unauthorized third parties is significantly reduced. The use of fictitious information makes it possible to use less secure communication between the access provider and service provider for many parts of the communication, while guaranteeing a high level of privacy.

In an embodiment according to the invention, the user (terminal) identifying information includes an actual network address, such as an IP address or MSISDN, uniquely identifying the user terminal with respect to the wide area network and/or to the further telecommunication system, and wherein the corresponding fictitious identifying information includes a different unique network address not used as an actual network address by any of the user terminals. The communication address of the user terminal is shielded. In this way it becomes less easy to send undesired messages to the user terminal, such as spam (advertisements) or virus attacks. All such messages have to pass through the access provider that can use predetermined criteria to decide when to let a message pass through, by converting the fictitious address to an actual address for the (user) terminal. A strict criterion could be to only enable forwarding of messages to a user terminal that relate to outstanding service requests. Preferably, the user can configure the access provider to control what is being passed on. It will be appreciated that whereas from the perspective of the access provider the address of the user terminal is regarded as the actual address of the terminal, in reality this may not be the case. For example, the user may have a system with several terminals communicating in a local area network, where access to the local system is provided through one of the computers (and using its address), possibly in combination with a firewall. In such a case, the actual address may not be the address of the terminal requesting the service but it typically is an address of an actual device at the same location and, as such, provides malicious parties relevant information.

In an embodiment according to the invention, the service provider is arranged to: generate a message (hereinafter "cookie") with data relating to a previous access to the service provider by a user terminal; send the cookie to the user terminal, and for a subsequent service request, obtain the cookie from the user terminal to provide a personalized further service;
the access provider including a storage for storing cookies sent by a service provider in association with a (user) terminal and for a request from a user (terminal) for a service of a service provider supplying the cookie of the (user) terminal to the service provider. The access provider is used for storing cookies (that are well-known within Internet). By storing the cookies centrally in or in association with the access provider, the terminals are relieved from storing them. This enables the use of less sophisticated terminals, with less storage and processing capabilities. It also enables centralized management of the cookies, such as rules for accepting en discarding cookies.

In an embodiment according to the invention, the cookie is stored in association with the fictitious identifying information associated with a (user) terminal. The fixed relationship between the actual and fictitious identity of a user enables the service providers to continue to deliver personalized services, without knowing the actual identity. The cookie can still store user-specific information, such as parts of the web site that the user has visited at an earlier stage, to enable better access a next time.

In an embodiment according to the invention, the cookie is stored in association with a user identity to enable a user associated with the user identity to obtain same personalized services independent of a user terminal used by the user. Storing the cookies centrally enables the user to use the same cookie for obtaining personalized service irrespective of the actual user terminal used by the user. In the conventional Internet architecture, the cookie is stored in the user terminal. As a consequence, when a user uses a different terminal, the cookie is not present there or not up-to-date with last activities of a user. This drawback is overcome by using a central storage for the cookie. The cookie may be stored in association with the real user identity or the fictitious user identity.

In an embodiment according to the invention, the service is associated with virtual service identifying information, such as a URL, that is included in at least one request message from a user terminal to a service provider to identify the service; the access provider including: a storage for storing for each service provider an associated actual service identifying information to identify the service with respect to the wide area network; and a URL rewriter for replacing in the request message from the user terminal the virtual service identifying information with the corresponding actual service identifying information for forwarding to the service provider and for replacing in a message from the service provider to the user terminal the actual service identifying information by the corresponding virtual service identifying information. The identity of the service provider and service is hidden from the user (terminal). To this end, the access provider translates a virtual service identity, as seen by the terminal, to an actual identity used on the Internet, and vice versa. This shields the service providers and their services from the users and, as such, reduces the chance of attacks on the server of the service provider. Moreover, it makes it difficult for the user to circumvent the access provider and directly approach the service provider or his services, possibly without being authorized.

In an embodiment according to the invention, the access provider is arranged to identify request messages for services associated with virtual service identifying information to or from a service provider, and direct those messages through the URL rewriter. The access provider enables direct access to certain service providers (e.g. those that do not provide paid or personalized services) without hiding those service providers. Shielding of identity only occurs for those service providers requiring it. To make a distinction between the two groups, the access provider may have a list of service providers requiring shielding and, for each service request by a terminal, check that list. Preferably, the service provider makes a first distinction based on a predetermined pattern in the service request from the user (terminal). If the pattern is not present, unshielded access is provided. If the pattern is present, the access provider tries to shield the identity by replacing it.

In an embodiment according to the invention, the URL rewriter is arranged to add parameters in the request message from the user terminal to the service provider to enable the service provider to optimize the service for the user (terminal). During the shielding of the identity of the service provider, additional information is added to the service request to enable a better providing of the service. In a preferred embodiment, the access provider adds location information as a parameter in a service request. It will be appreciated that location information may also be supplied in other ways, e.g. using separate messages, to the service provider. Adding the location information as parameters ensures a fast and reliable processing by the service provider. As an example of a location-specific service, a customer may request through his mobile terminal information about traffic or about a restaurant location in the same area (or even region) to a content provider. Through the location service of the mobile telecommunications operator the location of the customer is forwarded to the content services company, and based on that location information, the content service provider forwards the location or area or regional specific data, such as the specific location dependent traffic or restaurant information. Preferably, the access provider centrally collects the location information on behalf of the service providers. The determination of the location of a customer can be done through an additional module that is connected to or part of the access provider and that is further linked to a access providing communication system such as a mobile telecommunication system, for instance a GSM or GPRS or UMTS or any cellular network that can provide location information based on the cell structure of the network. Where required, more accurate ways of locating a user may be used, such as a GPS/GLONASS system. The service of location the position can be taken from or be provided by a third party and be forwarded by the access provider. If required, location data can also be sent from the customer to the third party content provider through the access provider. Such information can then be used for more than one service provider. As an example, information for a stationary user terminal needs to be supplied only once by the user and can be re-used from that moment onwards.

To meet this object of the invention, the service access provider for use in a system includes a communication interface for communicating to at least one service provider via a wide area network, in particular the Internet, and for communicating to at least one user terminals via a further communication system, wherein the access provider includes a service access manager for verifying whether a user terminal or a user of a user terminal is authorized to request a service from a service provider and upon positive verification enabling the user terminal to access the service provider, thereby relieving the service provider from having to authorize the user (terminal).

To meet this object of the invention, the method of providing services to a user terminal via a wide area network, in particular Internet, includes receiving via a further communication system from a user terminal a message requesting a service from a service provider; verifying whether the user terminal or a user of the user terminal (hereinafter "user (terminal)") is authorized to request a service from the service provider, and upon positive verification, enabling the user terminal to access the service provider through the wide area network, thereby relieving the service provider from having to authorize the user (terminal).

Preferably, the system and access provider according to the present invention are at least partly implemented on a computer environment. Advantageously, the method is performed by a processor, where a suitably programmed computer program product causes the processor to perform the steps of the method.

Summarizing, the architecture according to the invention provides, among others,:
- centralized access to the service providers, covering identification/authorization of user (terminals);
- centralized billing for services of the service providers;
- shielding/hiding of the identity of the user (terminals);
- shielding of the service providers;
- centralized store-and-forward delivery of content; and
- personalization of service, including location dependency and centralized storing of cookies.

All of these aspects can be employed independently. Preferably, some or all of these functions are combined in the same subsystem. Advantageously, the functions are provided in combination with offering access to the Internet at the physical level, i.e. in or in co-operation with the device that couples the access network to the Internet.

These and other aspects of the invention are apparent from and will be elucidated with reference to the embodiments described hereinafter.

### Brief description of the drawings

In the drawings:
Fig. 1 shows a diagram of the system according to the invention,
Fig. 2 shows a block diagram of the service access provider according to the invention,
Figs. 3 and 4 represent an example of centralized billing according to the present invention.
Fig. 5 shows a block diagram of a preferred embodiment with dual-stack mobile terminals;
Figs 6 to 8 show a flow-chart of a preferred embodiment of the method;
Fig. 9 shows a flew chart of billing according to the invention;
Fig. 10 shows a further preferred embodiment for mobile terminals; and
Fig. 11 shows using location information.

### Detailed description

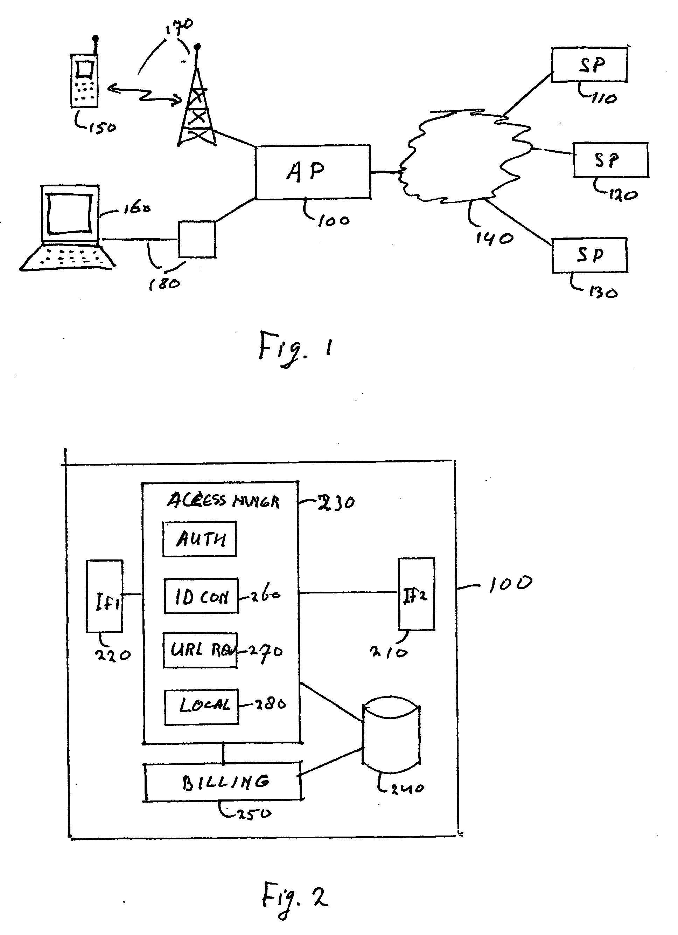

Fig. 1 shows a diagram of the system according to the invention. The system includes an access provider 100 that provides access to services provided by service providers (shown are service providers 110, 120, and 130), where at least part of the invocation or delivery of the service takes place via a wide area network 140. In the remainder, the wide area network will be referred to as Internet, being the preferred wide area network for the system. Shown are two user terminals 150 and 160. Terminal 150 is a mobile terminal that communicates with the access provider at least partly via a wireless telecommunications network 170. Terminal 160 is a conventional stationary terminals, such as a personal computer, that communicates to the access provider 100 via a conventional access network 180, such as a telephone line and telecommunication switches or a cable network (and fixed telecommunication lines). According to the invention, a centralized access provider 100 controls the access to the service providers 110 to 130. As will be described in more detail below, the access provider 100 can support the service providers in many different ways. The centralisation enables cost-saving, increased security, and simplified usage by the user. As an example, the access provider can carry out the following functions:
a) identification of the user (authentication)
b) granting of access (authorization)
c) secure routing to the relevant target systems (access router)
d) providing billing data (billing trigger)
e) checking credit (credit check) or checks the creditworthiness and the consistency of successive requests
f) providing fashion handling (personalization)
g) providing a cookie store
h) providing secure delivery of digital content

The access provider 100 deals with access at service level. Preferably, this role is combined with providing access to the Internet at physical level. If desired, the two types of providing access may be kept separate, where the service access provider 100 communicates with the physical access provider (not shown separately in Fig. 1) via some form of communication, such as a direct connection or via the Internet. In the remainder, it is assumed that providing access at the physical level and at service level is performed by the same subsystem 100.

Fig. 2 shows a block diagram of the service access provider 100 according to the invention. In the example, the service access provider also provides access at the physical level to the Internet. As such, the access provider has a first communication interface 210 for communication towards the Internet (i.e. with the service providers) and a second communication interface 220 for communicating to the user terminals via an access network. As will be appreciated, more than two interfaces may be involved. The access provider 100 may be directly connected to or integrated with a telecommunication switching/routing centre. Such aspects are not relevant for the invention and are as such not discussed further. The access provider is preferably implemented on a computer platform, equipped with one or more processors that, suitably programmed, perform the functions according to the invention. The platform is preferably chosen from the generally available platforms optimised for telecommunication functions or Internet functions. The platform includes a background storage 240, typically implemented on hard disks, such as a RAID system, a main memory, a user interface for enabling operator control and feedback, and any ordinary hardware used in such computer systems, such as I/O interfaces and control logic.

The access provider includes an access manager 230. The access manager verifies whether a user or user terminal is authorized to access services provided by the service providers 110 to 130. The authorization may involve identifying the terminal, e.g. based on an electronic identification of the terminal as used in the access network. An example of such identification is MSISDN (Mobile Station ISDN Number) or other suitable identification provided by the access network 170, 180. Also a specific terminal identification scheme may be added (in hardware or secure software) in the terminal to generate such an identification independent of the access network. For certain services (e.g. costly services) identification of the terminal may not be required or not be sufficient, but identification of the user may be required. This may be performed by the user entering a user identification (e.g. user name or account name) or, for highly secure applications, more reliable information such a biometrical data, like a fingerprint, or voiceprint, may be collected by the terminal and provided to the access manager 230. In addition to the identification, explicit authorisation data may be required, e.g. by the user entering a password. If the identification was reliable enough (e.g. using biometrical data), the authorization data may be implicit in the identification data. For high security applications, the identification and/or authorisation data may be authenticated using any suitable authentication (encryption) scheme as is known in the art. The access manager checks whether the identified terminal or user is authorized to access services by checking data stored in the storage 240 for the identified user (terminal). If the outcome is positive, access to the service is enabled. If the service access provider is also the physical access provider, the enabling may take place by enabling the user to access the Internet in general. Any access through this access provider to the Internet is then authorized. If the service provider is not the physical access provider, the service level access provider may instruct the physical level access provider to provide access, or communicate the authorisation of the user (terminal) to the service providers.

Preferably, a successful authorization allows the user to access services of the one involved service provider (or preferably all service providers, as long as the credits have not expired) during a same communication session that started by the user logging in (in any suitable form, such a conventional username, password login or via electronic identification). The access manager uses a "Subscription check" to determine whether the user has subscribed to the requested service (or to services in general). If the result is positive, access is granted. If not, the service request is forwarded to a special application for subscribing to services. This application takes the user through a subscription procedure, which culminates in a subscription for the user. At this point, the access manager then forwards the user request to the subscribed service. This means that the content provider no longer has to worry about user management.

In a preferred embodiment, communication between the service access provider 100 and the service providers 110-150 is performed in a secure way. In particular, information on authorization of a user (terminal) is secured. Any suitable technique for securing the communication may be used, e.g. using the techniques already used for secure links via the Internet (for example, SSL or VPN).

In a preferred embodiment, billing in the system for providing of the services is provided centrally by a billing manager. Fig. 2 shows that the billing manager 250 is also part of the access provider 100. For optimal integration, the billing manager 250 may be part of the access manager 230. It will be appreciated that the central billing manager may also be separate from the central service level access manager and separate from the physical level access manager. The billing manager 250 checks the solvency of the user associated with the user terminal. Only on a positive outcome does the access manager 230 provide access to the services. The solvency checks may be for only one specific service, or for all services, possibly up to an agreed credit level. The billing manager may perform the solvency checks by verifying solvency data (e.g. agreed credit level, outstanding bills, etc) as is available in the storage 240 in association with the user or user terminal. The actual solvency check may also be performed by a third party, where the billing manager provides the relevant information, such as user identification and credit level to be verified, to the third party. The solvency check function checks in a database, that is preferably stored in storage 240, whether the user has enough credit to be able to use the requested service. If the user is sufficiently creditworthy, the request is processed and forwarded to the relevant content provider. If the user does not have sufficient credit, the user is informed that his credit has expired and he cannot use the requested service. In this way, the access manager ensures that only those services may be used, for which sufficient credit is available by the requesting user.

Preferably the billing manager generates billing records necessary for the actual billing. This may be done by adding the service related costs to the costs involved in gaining access to the Internet, or using the access network as such. Those costs are usually billed by the telecommunications (physical access) provider. In particular, if the billing manager is part of or related to the physical level access providing system, integration of both types of billing can be achieved easily. If the billing manager is separate, the billing manager may perform centralized billing for the services itself, or may use third parties (e.g. a credit card company, a banking institute, or a telecommunications operator).

Billing may be performed dependent on the type of customer. With the existing emerging new services such as Hi site SMS, WAP services and m-commerce, all accessed using cellular phones, billing of services becomes more and more complex. Further, some services are only available to so-called postpaid customers, i.e. subscription customers, and tariffs for a specific service may be subscription-specific (e.g. free for high. end subscribers, paying for low-end subscribers). This usually leads to development of a different architecture per service to cope with these differences, as the content provider usually is not aware of the customer's privileges. New ways of paying for products and services via mobile telecommunication means are currently being introduced. Products include for example drinks obtainable from a distributor in a public place, while services can be e.g. parking space or movie tickets. Also so-called mobile banking will be available soon. These systems rely on a subscriber account, which can be used to pay for products and/or services by using a cellular phone. To relieve the service providers (content providers) from having to deal with all types of different customers, where each types has an associated set of billing data, according to the architecture of the invention this is taken over by the centralized billing manager 250.

In a preferred embodiment, billing only occurs for services/goods that have been provided. Where digital content is provided, the physical access provider can simply check that such content has been provided to the user (terminal) via the access network and inform the billing manager 250 accordingly. For delivery of goods or services in another way, the service provider may provide such information to the billing manager 250, preferably in a secure way. A delivery check function of the access manager checks whether a response from the content service provider includes an http error code. If an error code is received, an error message is generated to the user (terminal) and no actual billing takes place. If there is no error, the response from the content provider is returned to the terminal device and billing is triggered in parallel to this. A "billing" function of the access provider notifies the billing manager 250 of the successful delivery of content, and supplies the billing data.

Advantageously, electronic content is delivered through the access manager in a store-and-forward manner. This means that the service provider delivers the content to the access provider 100, that temporarily stores in it in storage 240, before passing it on to the user terminal. In this way, any disturbance in the access network, that may be unnoticed by the service provider, can be overcome. For streaming data, the access provider 100 may only buffer a relatively short amount of data (e.g. in the range of seconds to a few minutes) to avoid requiring too much storage. Such a period should be chosen such that the user can normally resume consumption of the data within that time period and that the service provider can reliably terminate the delivery for resumption at a later moment. It will be appreciated that delivery of real-time content (e.g. a sports event) can not be halted in such a way. For such content it is preferred that the access provider stores more data. The store-and-forward mechanism allows the system to accurately determine which content has actually been delivered so that only such content is actually charged to the user.

### Example 1: content billing of SMS via UCP

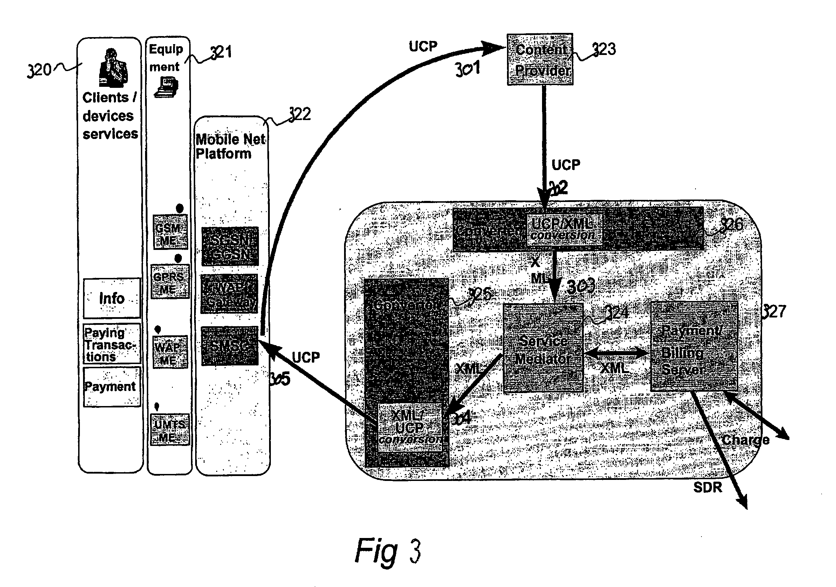

Figure 3 illustrates the billing for the specific case of SMS billing. A customer 320 sends in a request for a content service, in this case an SMS message (1). This message is sent by the telecom service provider 322 to a content provider 323. The telecom service provider acts then as the access provider according to the invention. The content provider 323 reacts to the message by sending the desired content to the billing manager 324 via message 302. The billing manager 324 checks whether the customer is entitled to the content service. If allowable, the content is sent to the customer using links 304 and 305. The Payment/Billing server 327 takes care of charging the customer's prepaid account, or sends an SDR (Service Detail Record) to the Telecom Service Provider's billing services to include the content service on the next bill for the postpaid customer. It is preferable to include the converters 325 and 326 which transform UCP messages to XML messages and vice versa into the access provider module, as this allows for a unified standard language within the access provider/payment/billing server module such as XML, and is also useful to deal with requests in different languages, as these requests will be translated by the converters 325 and 326.

### Example 2: content billing of WAP

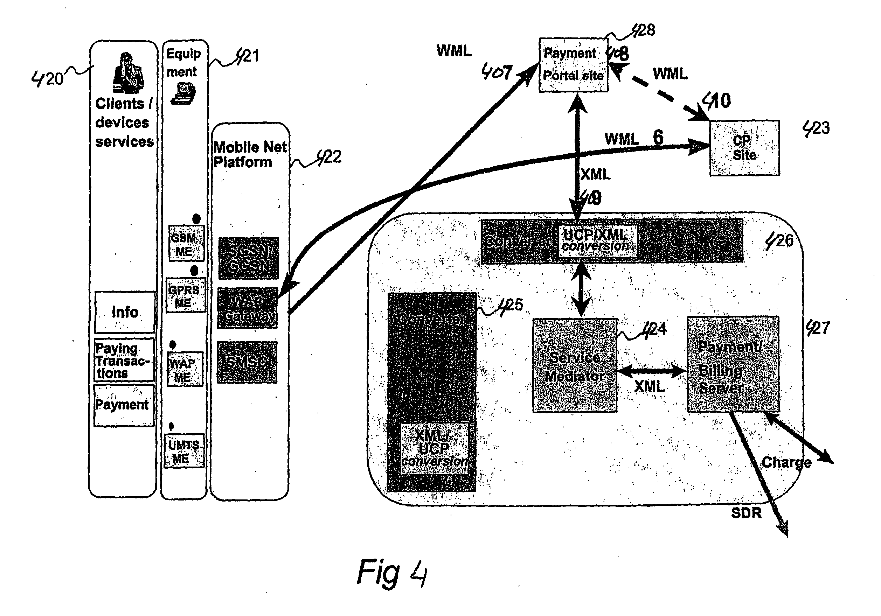

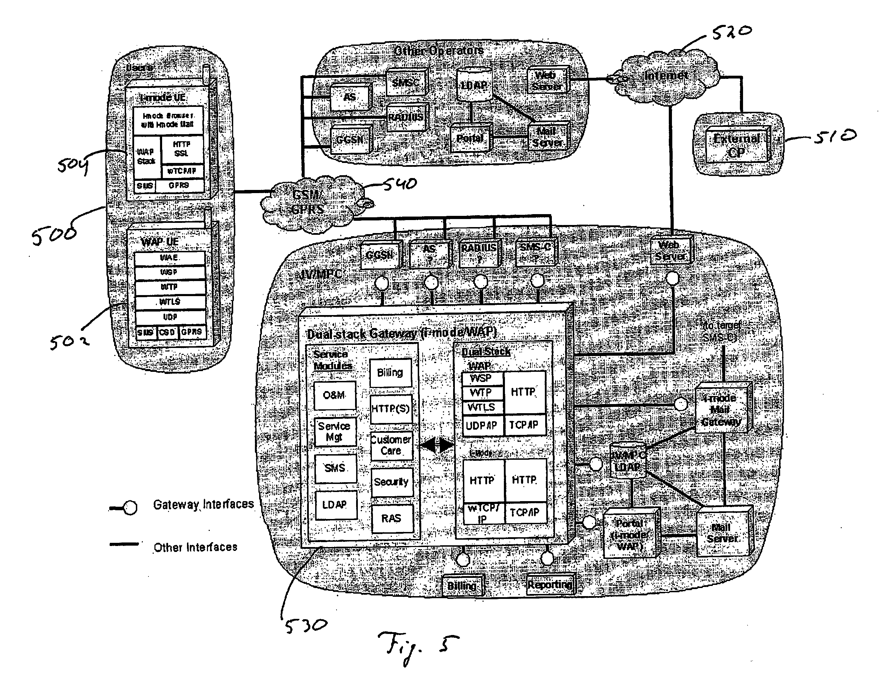

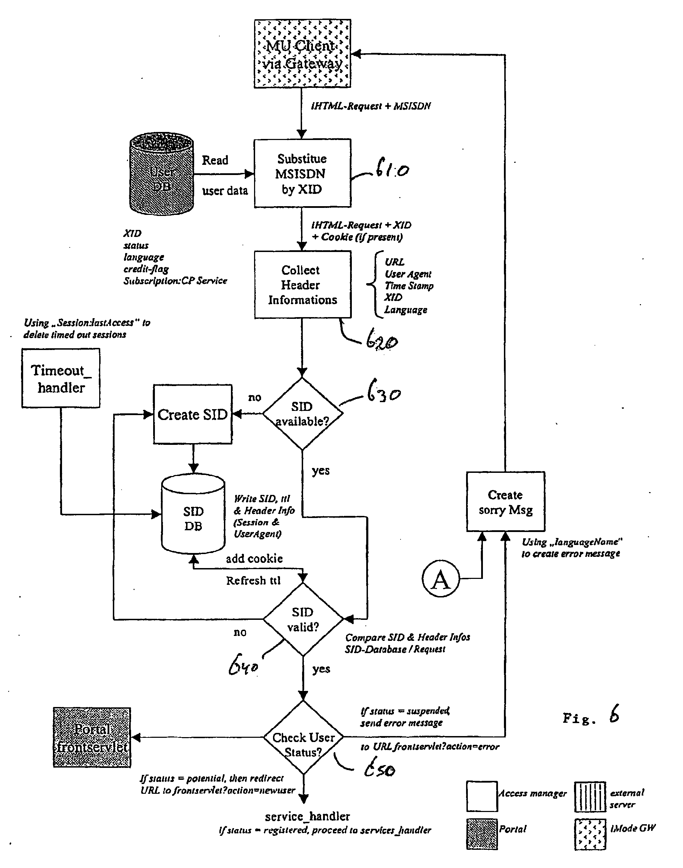

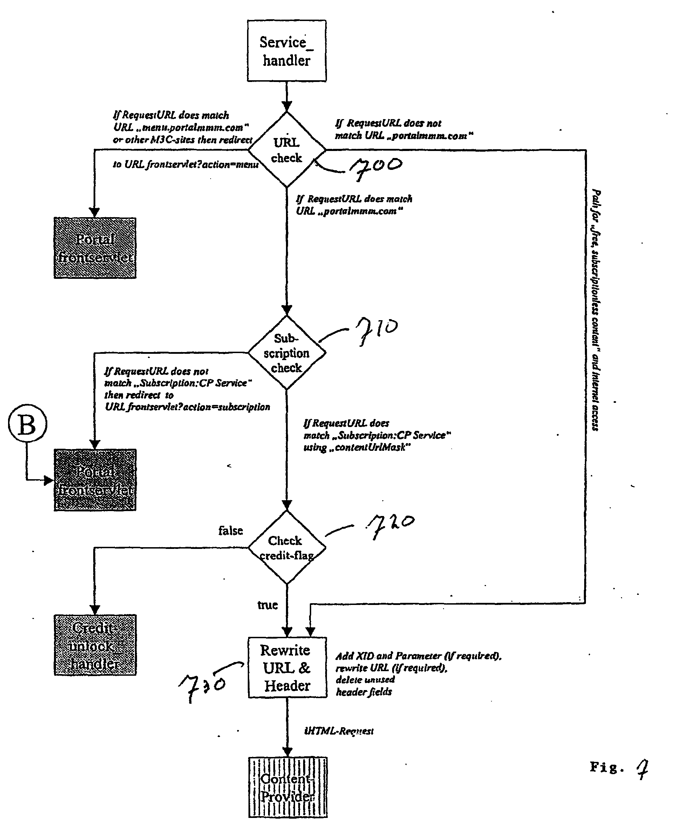

Figure 4 illustrates the billing for the specific case of WAP services. Here again the request for a content service, a WAP request in this case, is sent to a content provider's site (CP Site) 423 via WML message link 406. These requests are direct and the customer 420 can select the information he needs by browsing the site of the content provider 423, or change content provider 423 when he does not find the information he needs. A request for a paying content service will transfer the customer 420 to a payment portal site 428 using WML message link 407. The payment portal site 428 receives data from the content provider 423(e.g. amount, transaction identification number and content-provider code) via WML message link 408. The customer 420 will be authenticated at the payment portal site 428 and is requested to confirm the payment. When the customer agrees, the payment/billing server will be queried to check whether the customer is entitled to the service via XML link 409, converter 426 and XML link to the Billing manager 424. If the answer is affirmative, the payment will be effected as described higher and the content provider 423 will receive a confirmation of the payment via WML message link 410. The customer will be redirected to the content provider's site to receive the requested content services via WML message link 406.

From the examples it will be clear that the billing of the present invention can be easily adapted to other content services than those illustrated by the figures and examples. More particularly SMS, Hi site SMS, UMTS, WAP, banking services, credit services, on-site payment for services (e.g. parking lot) or products (e.g. drinks dispenser), ... can be easily implemented using a single architecture. Also subscriber accounts can be charged using the method of the invention, internal accounts (i.e. accounts that reside at the Telecom Service Provider) as well as external accounts (e.g. credit card companies).

The access provider has as a goal to deal with providing the content service to the customer and with the payment issues. The payment/billing server 27 allows querying customer data and effectuates the payment. Preferably, the telecom transport costs for providing the service are billed separately. This can easily be implemented using a tariffing server. This is necessary because not all traffic generated by the content request will be normal traffic, billable by the telecom service provider but can be e.g. internet traffic.

As described above, following successful identification, the terminal device can be recognized and the user authorized. In the system according to the invention, the access provider includes an identity converter 260. In a request from a user (terminal), the identity converter 260 replaces identifying information of the user (terminal) with associated fictitious identifying information. The fictitious information is stored in the storage 240 in association with the user or the user terminal. In the reply from the service provider, the fictitious information is repiaced by the actual information. The identifying information includes the address of the terminal with respect to the Internet (i.e. the IP address). Preferably, the identity converter 260 also replaces other identifying information, such as the name and address of the user. As such, the user is assigned an anonymous user ID (hereinafter also 'XID'). This user ID is valid for all subsequent processing and is also transmitted to the content service provider. Thus personal information is never transmitted from the access manager to subsequent services and the user's anonymity is upheld. This anonymous user ID is written into the http header by the identity converter 260 of the access manager 230. The access manager extracts all personal information from the http header and replaces it by adding the anonymous user ID. Once this modification has taken place, the request is anonymous. The access manager can make the fictitious identifying information available to certain content providers, so that the content provider can compile a specific user history or offer a specific user range on an anonymous basis.

Preferably, the fictitious user personal data is independent of the actual terminal used by the user. In this way, a same user can be assigned the same fictitious identity for more than one terminal. In this way, personalized services can be provided irrespective of the actual terminal being used. To this end, the storage 240 can store the fictitious personal data in association with more than one terminal. Such an association can be achieved in many ways, as is known to persons skilled in the art, for example by coupling fictitious personal data to terminal identifying data via pointers.

In a preferred embodiment, the access provider includes a storage (e.g. storage 240) for storing cookies on behalf of the terminal device. The service provider generates the cookie in response to access by the user. The cookie contains information that enables the service provider to optimise the service for the user (e.g. the cookie indicates areas of preference of the user, such as parts of the web site visited by the user). In itself cookies are known. According to the invention, the access provider 100 extracts the cookie from the response header of the response message of the service provider (in response to a request by the user (terminal)) and stores the cookie in a so-called cookie store. This cookie store keeps the received cookie until its validity expires. If a request is made for a URL of a service provider that has sent a cookie previously, the cookie for that specific URL is added. If the next request is received from that terminal device, the access provider adds the cookie to the request header and then sends the request, including session identification, to the target system as cookie context.

Advantageously, the cookie is stored in association with the fictitious user identity. Preferably, the access provider uses the same cookie irrespective of the actual terminal being used by the user. To this end, pointer techniques may be used to store the cookie in association with the (fictitious) user identity independent of the actual terminal ID.

In a further embodiment, the access provider 100 is arranged to shield the service providers towards the users. Each service is associated with virtual service identifying information. In Internet usually a URL (Universal Resource Locator) is used for identification. The virtual URL is included in the request message from a user terminal to a service provider to identify the service provider and service. The storage 240 stores for each service an associated actual service identifying information (e.g. its actual URL) to identify the service with respect to the wide area network. The access provider 100 includes a URL rewriter 270 that replaces in the request message from the user terminal the virtual URL with the corresponding actual URL for forwarding to the service provider. The URL rewriter also replaces in a message from the service provider to the user terminal the actual URL by the corresponding virtual URL. It will be appreciated that instead of URLs also other identifying information may be used, as prescribed by the protocols being employed.

Preferably, the access provider can quickly distinguish between messages from/to shielded and non-shielded service providers. Messages that need to be shielded are directed through the URL rewriter, other messages are passed through unmodified with respect to the service provider's URL. A quick distinction may be made based on a predetermined pattern in the shielded URL. The pattern should be chosen such that it normally does not occur in URLs, for example a reasonably long sequence of rarely used characters.

In a preferred embodiment, the URL rewriter adds parameters in the request message to the service provider to enable the service provider to optimize the service for the user (terminal). This parameter may, for example, be actual or fictitious user identifying information. Preferably, the URL rewriter also adds location data, identifying the location of the user. To this end, the system includes a localizer 280 for retrieving information on a location of a user (terminal) to enable the service provider to provide a location dependent service to a (user) terminal. The actual location data may be provided by third parties, such as a mobile access network or a GPS system.

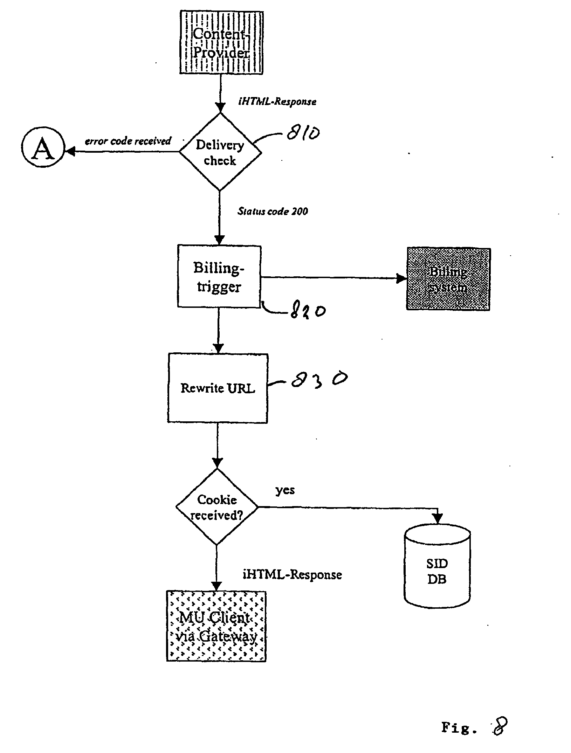

As will be appreciated by persons skilled in the art, preferably the improvements indicated above are all combined in one access provider. If desired, the improvements can also be used in isolation, either in or in co-operation with the physical access provider. Below a description is given of a best mode operation. In this embodiment, as also shown in Figure 5, a mobile terminal 500 is used that supports both a WAP stack 502 and an i-mode stack 504 to access service providers via the Internet 520. The figure gives an overall view of the architecture. It shows a dual-stack access provider 530 (also referred to as gateway) with logically having two main parts - the dual-stack -, containing an i-mode stack and a WAP stack, and also the service modules that are needed to provide various services for both i-mode and WAP. The dual-stack gateway is connected to the mobile access network 540 as well as the Internet 520 and serves WAP and i-mode requests for the service providers that use the centralized access system/gateway. Figs. 6 to 8 show details of the method according to the invention as described in more detail below. Figs. 6 and 7 show the flow from the terminal to the service provider. Fig. 8 shows the reverse flow.

In the gateway, a function authentication handler is responsible for verifying whether the user is authorized to access the requested content. A number of additional checks are carried out for this purpose:
- User identification/authentication (610)
- Session check (630, 640)
- User status check (650)
- URL check (700)
- Subscription check (710)
- Credit check, billing (730, 820)

### User identification/authentication

The access provider (gateway) provides a mechanism to authenticate users at the start of a session. If the session is started from a mobile terminal, e.g. a WAP or imode session, this is done either by checking MSISDN, or a combination of MSISDN with a username and password (global and personal passwords are possible). The information is extracted form the header in step 620 of Fig. 6. A preferred user terminal supports both mode and WAP. i-mode users are then authenticated the same way that WAP users are, with their MSISDN (or an equivalent number or format). The user does not need to perform different tasks to access WAP services than to access i-mode services. The gateway acquires the MSISDN and IP address of the user from the network during the session establishment phase, for both i-Mode and WAP requests i.e. via Radius accounting. As has been described above, the user identity may also be hidden by replacing it with a fictitious user identity. This is shown in step 610.

### Session handler

The session handler is a part of the authentication module (access manager) and responsible for checking if a request belongs to a request carried out during a very specific period of time. To this end, in step 630 of Fig. 6 the session handler analyses the request header for an internal session object cookie, for example, containing the session identification generated by the session handler. If no session information is available on a particular terminal device, the session handler generates a random number and collects information extracted from the request header. The following information is provided by the request header: URL, UserAgent, Cookie, XID (i.e. the fictitious user identity), Language and Time stamp. This data is stored and remains valid for a specific period of time. If no new data arrives during this time period, the data is deleted.

The session handler now receives a request including a session identification (SID). To check whether the session is valid, the session handler looks at the data stored for the session whilst the previous session identification was being created. If session information exists and the data corresponds with the data supplied by the http header, the session is seen to be valid. If there is a discrepancy, the session and the request are seen as invalid, and are treated as a request with no session identification. The gateway can perform session handling for i-mode requests, from the user terminal. Sessions will be established from the terminal to the gateway and from the gateway to the service provider.

### Status handler

If the session is valid, the user's status is verified in step 650 of Fig. 6. The following statuses are possible: registered, potential, or blocked. The status "potential" applies where a terminal device has not previously had contact with the access manager and has not therefore been granted any rights. If the access manager receives a request, which carries the user status "potential", the request will be redirected to an application, which captures the relevant user data and subsequently upgrades the status to "registered". If access to the access manager itself or subsequent services is denied to the client, the status is "blocked". The error message appears in the language used by the user to enter his data (potential status). If the status is "registered", the request is presented to the "Identification" function.

### Service handler

The service handler checks whether there is a matching string within the URL (http request) in step 700 of Fig. 7. This string is adjustable, and reads for example portalmmm.i-mode. If the matching string cannot be found in the request URL, the "Service Identification" function decides that this request is not meant for the content providers using the services of the access manager. It is most likely to be a request that should be passed to the Internet without further examination. If the matching string is found within the request URL, the service handler will now decide whether the request should be passed to a content provider using the services of the access manager, or whether it should be passed to an application to capture more user data. This is what happens for example when the "potential" status is detected, or the user wishes to subscribe to new services or cancel old services. If the service handler recognizes the matching string, it will use the corresponding URL for the target system to create a connection between it and the content provider: The request URL with the matching string will accordingly be rewritten to the target URL of the content provider (URL rewriting) in step 730. This has as an advantage that the URL of the content provider is not visible at any time - neither through the request, nor upon receipt - as the response from the content provider is also modified in a way that the URL returned to the terminal device contains the matching string. From a security point of view, this behaviour divides the user request and the final request into two independent tasks. The function "URL rewriting" prevents the URL of the content provider from being published at any time, as it is only known to the access manager and the content provider. Accordingly, this method of operation prevents direct attacks, e.g. direct attacks on the content provider. Apart from that, URL rewriting increases the speed of the procedure quite considerably, as the process of checking whether a request relates to the Internet or a content provider only involves checking for the matching string and not qualifying the complete URL. As part of the rewriting of the URL, the gateway support mechanisms to allow for personalization of user's pages. To this end, the URL Rewrite function appends parameters to the URL request (i.e MSISDN , UID, etc). Preferably, the gateway retrieves information on the location of the user or user terminal and adds this as a parameter. Superfluous header information is deleted (especially if the request is to be transmitted via a non-secure Internet connection). The URL Rewrite function also neutralizes the response from the service provider as shown in step 830 of Fig. 8 by retranslating the actual URL to a virtual URL.

### Access router

The "Access router" function modifies the URL and the header according to the results of preceding checks and sends the request to the desired service provider or necessary application. The connection to the service provider can be cryptographically secured, for example using an SSL tunnel (Secure Socket Layer) or a Virtual Private Network (VPN).

### Access control

The system stores a "black list" of service providers, being service providers that for various reasons are not accessible through the system. Also a "white list" of (WAP or i-mode) sites is stored. Access to those sites can be granted, if all other conditions are met. Similarly, a black list of users (e.g. those that did not pay or misuse the system) and a white list of users (those that in principle may get access) is maintained.

### Proxying of content supplied by a service provider

The gateway receives requests from WAP and i-mode users. It interprets these requests and on behalf of the user terminal requests the content from the service provider. It does this by establishing a HTTP or HTTPS connection to the service provider to retrieve the content. The content will then be translated into binary WAP format for WAP users or into i-htm1 for i-mode users and supplied to the terminal. Preferably, the gateway also supports WAP standard push protocols (PAP, POTAP) where SMS can be used as a bearer. Preferably, the gateway also handles i-html email requests from i-mode users. Advantageously, the gateway must provide an interface to an SMSC (Short Message Service Centre for sending and receiving messages to/from an SMSC. The proxying enables easy checking of delivery as shown in step 810 of Fig. 8. Confirmation of the delivery triggers the billing 820.

### Billing

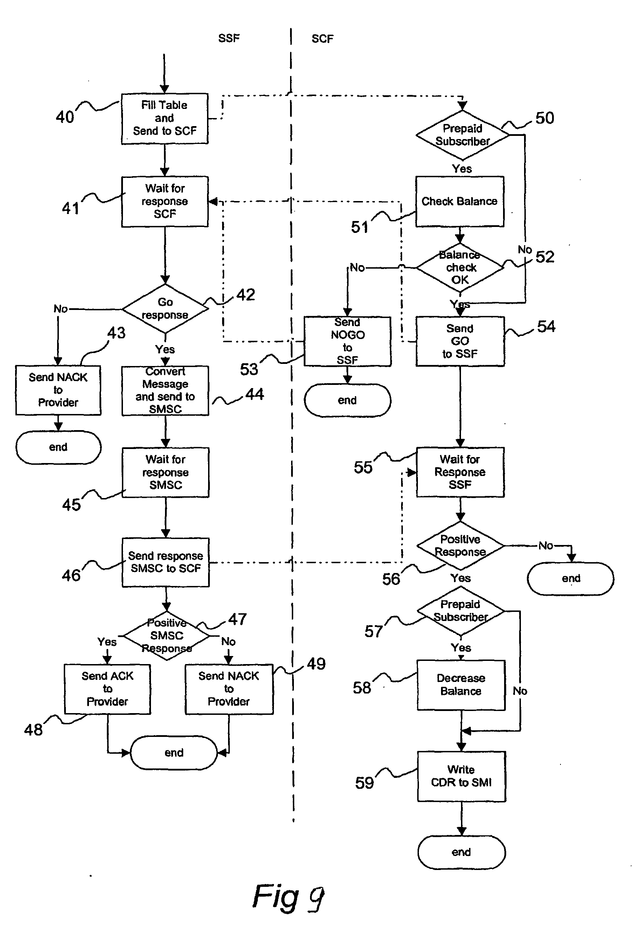

For billing, the Gateway differentiates between users with a different service profiles i.e. for prepaid and postpaid. The actual trigger for the billing occurs in step 820 of Fig. 8. Fig. 9 shows a flow diagram of an embodiment of the present method as implemented for delivery of SMS messages by a content provider 23. The flow can be divided in two interrelated parts, the Service Switching Function (SSF) and the Service Control Function (SCF). The SSF part receives a message of the provider at block 40 and searches for the data which are necessary to properly process the message in an administrative manner. These data are sent to the SCF. The switch Control Function first checks whether the customer is a prepaid subscriber at decision block 50. If the customer is a prepaid subscriber, the balance value is looked up in block 51 and in decision block 52, it is checked whether the balance is sufficient. If sufficient balance is present, a 'GO' message is sent to the SSF (block 54). If insufficient balance is present, a 'NOGO' message is sent to the SSF (block 53) and the SCF flow is ended. In the meantime, the SSF function has waited for a response from the SCF in block 41. In decision block 42, the response is checked. When negative (NOGO), a negative acknowledgement (NACK) is sent to the provider in block 43 and the flow of the SSF ends. When the response is positive, the message is converted and sent to an SMS centre in block 44. After that, the SSF function will wait for a response from the SMS centre in block 45, and after receiving the response, this response of the SMS centre is sent to the SCF in block 46. When the response from the SMS centre is positive (check in decision block 47), a positive acknowledgement (ACK) is sent to the provider in block 48 after which the flow ends. When the response from the SMS centre is negative (check in decision block 47), a negative acknowledgement (NACK) is sent to the provider in block 49 after which the flow ends. When the SCF receives the response of the SMS centre (after waiting in block 55) it checks in decision block 56 whether the response is positive. If the response is negative, the flow of the SCF ends. If the response is positive, it is again checked in decision block 57 whether the customer is a prepaid customer. If this is the case, the balance is decreased with the proper amount in block 58. When the customer is a postpaid subscriber, the flow directly continues to block 59, in which a call detail record (CDR is written to the SMI, after which the flow ends. Thus, the amount for the service will only be charged when the message transaction has actually taken place.

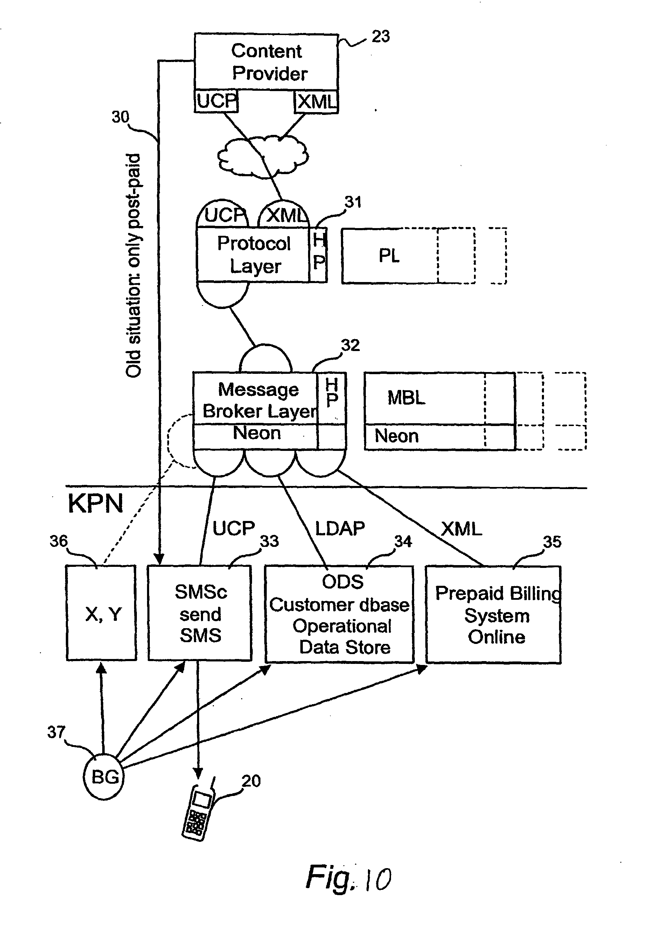

Fig. 10 shows an embodiment of the invention, with an access provider (service mediator system) that is implemented for a mobile telecommunications operator and that is on the basis of a Message Broker software module is described. In the existing situation, the content/service provider 23 communicates directly with the customer 20 via the SMS centre 33, as indicated by arrow 30. The Message Broker can be any one of the commercially available message broker products of major software companies. An example can be the impact product of the company Sybase (NEON). The message broker is split in a protocol layer 31 and a message broker layer 33. The message broker layer 32 is connected to a SMSc module 33 and to the Operational Data Store of the customers database (ODS) 34, and to the Prepaid Billing System 35. The protocol layer 31 is arranged for communication with a content provider system 23 and can communicate therewith via a UCP and a XML protocol. The protocol layer 31 and message broker layer 32 can communicate among them via a fast internal protocol. The message broker layer 32 can communicate with the SMSc module 33 via UCP protocol and to the Operational Data Store of the customers database (ODS) 34 via LDAP (Lightweight Data Access Protocol) protocol, and to the Prepaid Billing System 35 via the UCP and XML protocol. The message broker layer 32 can in a further embodiment also communicate with a location base server 36 using a suitable protocol. The SMS centre 33, the Operational Data Store of the customers database (ODS) 34, the prepaid billing system 35, and the location base server 36 can also communicate with a background server 37 of the telecommunication service provider. The background server 37 is arranged a.o. to control and update the other elements of the present system.

The service mediator 24 can check the status of the customer by querying the Operational Data Store 34. Using the MSISDN number of the customer 20 (country code, telecom provider code and serial number, e.g. 31653123456) as input, the Operational Data Store will respond with the status of the customer (prepaid, postpaid, none, or blocked flags). When the Operational Data Store 34 responds with the status 'none', that particular customer is not a subscriber of the telecommunication provider operating the service mediator 24. It is also possible, that a known subscriber will be blocked from certain services for a number of reasons. This situation will be indicated by the Operational Data Store 34 using the blocked flags.

### Location information

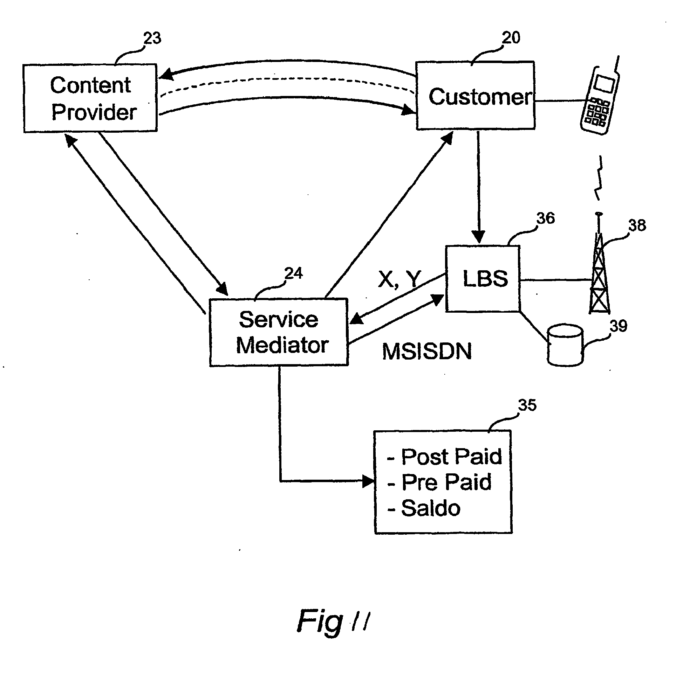

In Fig. 11, a schematic diagram is shown in which location information of the customer is used for providing information by a content provider 23. A customer 20, using a cellular phone, contacts a content/service provider 23 to indicate that localized information is needed. The content provider 23 forwards this request to the access provider (service mediator) 24, as discussed earlier. Alternatively, the access provider 24 has intercepted the request and acts on it automatically. The service mediator 24 may send a request for location information of a customer to a location base server 36, e.g. by using the MSISDN number of the customer as a reference. The location base server (LBS) 36 receives information on the present location of the customer 20, e.g. using information of the cellular network (transceivers 38, location database 39). Next, the service mediator 24 receives the co-ordinates (X,Y) of the associated customer and forwards this to the content provider 23. When it is checked that the customer is in the proper geographic area, the content provider 23 will send the information to the customer 20. When the service mediator 24 receives an acknowledgement from the content provider 23, it will take care of the billing in the above described way.

The information provided by the content provider 23 may include information requested instantaneously by the customer 20, periodic information, such as traffic information, or event generated information, such as a stock value crossing a preset threshold.

As described with reference to Fig. 9, the service mediator 24 may provide a UCP interface for the content providers 23. This interface is preferably arranged to only accept messages of the type UCP51. Other messages will be replied to with an error message (other defined types of UCP messages) or ignored (unknown messages).

In the UCP51 type message, a tariff field may be included (preferably in the XSER field), which indicates the tariff the content provider 23 wants to charge for that specific service to the customer 20. The service mediator 24 will parse the received messages, by checking the type of message, the LEN field in the header and the checksum of the UCP message. After this, the service mediator 24 will remove the tariff field from the UCP message and send the UCP message onward (e.g. to the SMS centre 33). In this way, the service mediator 24 is a transparent system for the content provider 23 with respect to UCP messages (with the exception of the tariff field. ,

The service mediator 24 will manage a provider profile file, in which it is indicated what actions are allowed for a specific content provider 23. This may relate to a specific interface which may be used by a specific content provider 23 (such as UCP, XML single destination or XML multiple destination), or to a specific function provided by the service mediator. The number of allowed functions for a content provider 23 may be equal to zero, thereby effectively blocking that content provider 23.

The service mediator is able to notify a subscriber (customer) when a message can not be delivered for some reason, such as too little funds on the prepaid account. Preferably, the text which is sent to the customer is dependent on the originating content provider. This function of the service mediator 24 can also be disabled for a specific content provider 23. In that case, it is assumed that the content provider 23 self will inform the customer.

Also, in the provider profile, a maximum amount for a service can be set for each provider. When the service mediator 24 receives a message in which the tariff as indicated is higher than the maximum amount for that content provider, the service mediator 24 will not accept the message (and inform the sender of the message using an error code in the response message).

The service mediator 24 will also check the length of a message. In case of an alphanumeric message, the maximum number of characters in the message is 160. When it is larger, the message will not be accepted. Transparent messages are already limited to 140 characters and this will not conflict with further system requirements. For transparent messages, no check on length is necessary.

The throughput for each content provider 23 is measured by the service mediator 23. When a preset maximum is crossed for a certain content provider 23 (as stored in the provider profile) the throughput of that content provider will be limited by delaying the response to a message (ACK/NACK). The maximum throughput is defmed as X messages in Y seconds.

In order to be able to control peak loads more efficiently, the service mediator 23 can define one or more time slots, in which a predetermined content provider 23 has access or no access to the system. This access time window function is relevant for a limited number of content providers 23 which have high throughput values. For 'small' content providers 23 this function is not relevant, and this can be indicated in the provider profile. The time window function can be implemented on the TCP/IP connection level. In that case, the service mediator 24 must be able to disconnect the TCP/IP connection to the specific content provider 23.

To be able to control the throughput of a content provider 23 it is also possible to set the maximum number of parallel connections for each content provider 23 in the provider profile. When a content provider 23 wants to open additional sessions, the service mediator 24 will ignore these messages and send an error code to the content provider 23.

The service mediator 24 will log various data concerning the processing of the transactions in log files. A number of generic requirements are set for the log files, i.e. starting time, maximum time that file is open, maximum size of the log file and manual closing of a log file to allow an operator to inspect the log file. As the service mediator 24 may be implemented in a parallel manner, i.e. a number of servers may run the service mediator functionality, the log files of each server may be copied periodically to a central logging server. It is also possible to post-process the log files, e.g. for data reduction or system analysis.

According to the invention, a method is disclosed for simplifying access to services in telecommunications networks, for example on the Internet, by one or more content providers or Internet web servers, and includes at least one telecommunications network, where every URL request coming from a telecommunications network user (MU) has to pass through an access manager, which carries out at least one of: authentication, authorization, access routing, billing and credit checks; for which the access manager deletes any personal information relating to the telecommunications user from the URL and replaces these with a fictitious ID XID, so that the request is anonymous following successful modification.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The words "comprising" and "including" do not exclude the presence of other elements or steps than those listed in a claim. The invention can be implemented by means of hardware comprising several distinct elements, and by means of a suitably programmed computer. Where the system/device/apparatus claims enumerate several means, several of these means can be embodied by one and the same item of hardware. The computer program product may be stored/distributed on a suitable medium, such as optical storage, but may also be distributed in other forms, such as being distributed via the Internet or wireless telecommunication systems.

## Claims

1. A system for providing services to a user terminal (150, 160); the system including:
at least one service/content provider subsystem (110, 120, 130), hereinafter "service provider", for providing services via a wide area network (140), in particular Internet, including a communication interface for communicating to the wide area network;
at least one service access provider subsystem (100), hereinafter "access provider", including a communication interface (210, 220) for communicating to the at least one service provider via the wide area network (140) and for communicating to at least one user terminal via a further communication system (170, 180); and
at least one user terminal (150, 160) including a communication interface for communicating to the access provider via the further communication system and, through the access provider, requesting services from at least one service provider;
wherein the access provider includes a service access manager (230) for verifying whether a user terminal or a user of a user terminal, hereinafter "user terminal" is authorized to request a service from a service provider and upon positive verification enabling the user terminal to access the service provider, thereby relieving the service provider from having to authorize the user/terminal.

2. A system as claimed in claim 1, wherein the access manager is arranged to execute a log-in operation of the user of the user terminal and, upon successful completion of the log-in operation, starting a communication session enabling verified access of the user terminal to the service provider during the session.

3. A system as claimed in claim 1, or 2, wherein the first communication interface of the access provider and the communication interface of the service provider are arranged to secure at least part of the communication between the access provider and the service provider.

4. A system as claimed in any one of claims 1 to 3, wherein the service comprises billable downloadable objects.

5. A system as claimed in claim 4, wherein the access manager is arranged to verify a solvency associated with the user/terminal with respect to costs associated with obtaining the service or the chargeable downloadable objects or a combination of both and only upon positive solvency verification enabling access to the service provider.

6. A system as claimed in claim 4, wherein the access manager is arranged to receive a service or chargeable downloadable objects or a combination of both from a service provider and to verify a solvency associated with the user/terminal with respect to costs associated with receiving the service or the chargeable downloadable objects or a combination of both and only upon positive solvency verification passing the content to the user terminal.

7. A system as claimed in claim 5 or 6, wherein the access manager is arranged to generate a billing record for billing the costs upon positive verification of the solvency associated with the user.

8. A system as claimed in claim 7, wherein the access manager is arranged to verify whether the requested service or the chargeable downloadable objects or a combination of both has been supplied by the service provider to the access manager or the user/terminal and to only generate the billing record upon confirmation of the delivery.

9. A system as claimed in claim 8, wherein the access provider includes a storage (240) for storing electronic content supplied by a service provider in response to a service request of a user/terminal for onward supply to the user/terminal; the access manager being arranged to repeat delivery to the user upon a failure to retrieve the electronic content by the user/terminal on a first attempt.

10. A system as claimed in claim 4 - 9, wherein the access manager is arranged to verify a solvency associated with the user/terminal in dependence on a type of user each associated with different billing data or an network operator or a combination of both.

11. A system as claimed in claim 10, wherein the type of customer includes at least a prepaid customer and a postpaid customer.

12. A system as claimed in any one of the preceding claims, wherein the user/terminal is associated with identifying information that is included in at least one request message to a service provider to enable the service provider to supply the service to the user/terminal; the access provider including:
a storage (240) for storing for each user/terminal associated fictitious identifying information; and
an identity converter (260) for replacing in a service request message from the user terminal the identifying information with a corresponding fictitious identifying information forwarded to the service provider and for replacing in a service response message from the service provider the fictitious identifying information by the corresponding user/terminal identifying information.

13. A system as claimed in claim 12, wherein the user/terminal identifying information includes or is derived from at least one actual network address, such as an IP address or MSISDN, uniquely identifying the user terminal with respect to the wide area network (140) and/or to the further communication system (170,180), and wherein the corresponding fictitious identifying information includes a different unique network address not used as an actual network address by any of the user terminals.

14. A system as claimed in any one of the preceding claims, wherein the service provider is arranged to:
generate a message, hereinafter "cookie", with data relating to a previous access to the service provider by a user terminal;
send the cookie to the user terminal, and
for a subsequent service request, obtain the cookie from the user terminal to provide a personalized further service;
the access provider including a storage (240) for storing cookies sent by a service provider in association with a user/terminal and for a request from a user/terminal for a service of a service provider supplying the cookie of the user/terminal to the service provider.

15. A system as claimed in claims 10 and 14, wherein the cookie is stored in association with the fictitious identifying information associated with a user/terminal.

16. A system as claimed in claim 14 and 13, wherein the cookie is stored in association with a user identity to enable a user associated with the user identity to obtain same personalized services independent of a user terminal used by the user.

17. A system as claimed in any one of the preceding claims, wherein the service is associated with virtual service identifying information, such as a URL, that is included in at least one request message from a user terminal to a service provider to identify the service; the access provider including:
a storage for storing for each service an associated actual service identifying information to identify the service with respect to the wide area network; and
a URL rewriter (270) for replacing in the request message from the user terminal the virtual service identifying information with the corresponding actual service identifying information for forwarding to the service provider and for replacing in a message from the service provider to the user terminal the actual service identifying information by the corresponding virtual service identifying information.

18. A system as claimed in claim 17, wherein the access provider is arranged to identify request messages for services associated with virtual service identifying information to or from a service provider, and direct those messages through the URL rewriter.

19. A system as claimed in claim 18, wherein the access provider is arranged to make the distinction on a predetermined pattern in the virtual service identifying information.

20. A system as claimed in claim 17, 18, or 19, wherein the URL rewriter is arranged to add parameters in the request message from the user terminal to the service provider to enable the service provider to optimize the service for the user/terminal.

21. A system as claimed in any one of the preceding claims, wherein the system includes a localizer for retrieving information on a location of a user/terminal to enable the service provider to provide a location dependent service to a user/terminal.

22. A system as claimed in claim 21, wherein the access provider includes the localizer.

23. A system as claimed in claims 20 and 21, wherein the URL rewriter is arranged to add location information as a parameters in the request message from the user terminal to the service provider.

24. A service access provider subsystem including a communication interface (210, 220) for communicating to at least one service provider (110, 120, 130) via a wide area network (140), in particular the Internet, and for communicating to at least one user terminal (150, 160) via a further communication system (170, 180), wherein the service access provider subsystem includes a service access manager (230) adapted to verify whether a user terminal or a user of a user terminal is authorized to request a service from a service provider and upon positive verification enabling the user terminal to access the service provider, thereby relieving the service provider from having to authorize the user/terminal.

25. A service access provider subsystem as claimed in claim 24 for use in a system as claimed in any one of the claims 1 to 23.

26. A method of providing services to a user terminal via a wide area network, in particular the Internet, including :
receiving at a service access provider subsystem via a further communication system from the user terminal a message requesting a service from a service provider;
verifying by said service access provider subsystem whether the user terminal or a user of the user terminal is authorized to request a service from the service provider; and
upon positive verification, enabling the user terminal to access the service provider through the wide area network, thereby relieving the service provider from having to authorize the user/terminal.

27. A computer program product when run on a computer for causing a processor to perform the steps of claim 26.

## Patentansprüche

1. Eine Vorrichtung zur Bereitstellung von Dienstleistungen für ein Benutzerendgerät (150, 160), wobei die Vorrichtung umfasst:
mindestens eine Dienstleistungs-/Inhalts-Anbieter-Untervorrichtung (110, 120, 130), nachfolgend "Dienstleistungsanbieter", zur Bereitstellung von Dienstleistungen über ein Grossraumnetzwerk (140), insbesondere Internet, beinhaltend eine Kommunikationsschnittstelle zur Kommunikation mit dem Grossraumnetzwerk;
mindestens eine Dienstleistungs-Zugangs-Anbieter-Untervorrichtung (100), nachfolgend "Zugangsanbieter", beinhaltend eine Kommunikationsschnittstelle (210, 220) zur Kommunikation mit dem mindestens einen Dienstleistungsanbieter über das Grossraumnetzwerk (140) und zur Kommunikation mit mindestens einem Benutzerendgerät über eine weitere Kommunikationsvorrichtung (170, 180); und
mindestens ein Benutzerendgerät (150, 160), beinhaltend eine Kommunikationsschnittstelle zur Kommunikation mit dem Zugangsanbieter über eine weitere Kommunikationsvorrichtung und zur Anfrage von Dienstleistungen von mindestens einem Dienstleistungsanbieter über den Zugangsanbieter;
wobei der Zugangsanbieter einen Dienstleistungs-ZugangsVerwalter (230) zur Verifizierung beinhaltet, ob ein Benutzerendgerät oder ein Benutzer eines Benutzerendgerätes, nachfolgend "Benutzer/Endgerät", autorisiert ist, eine Dienstleistung von einem Dienstleistungsanbieter anzufragen und nach positiver Verifikation, dem Benutzerendgerät Zugang auf den Dienstleistungsanbieter freizugeben, wobei der Dienstleistungsanbieter von der Autorisierung des Benutzers/Endgeräts entlastet wird.

2. Vorrichtung nach Anspruch 1, wobei der Zugangsverwalter ausgestattet ist, um einen Anmeldevorgang des Benutzers des Benutzerendgerätes auszuführen, und nach einer erfolgreichen Beendigung des Anmeldevorgangs, eine Kommunikationssession zu starten, die verifizierten Zugang des Benutzerendgerätes zum Dienstleistungsanbieter während der Session erlaubt.

3. Vorrichtung nach Anspruch 1 oder 2, wobei die erste Kommunikationsschnittstelle des Zugangsanbieters und die Kommunikationsschnittstelle des Dienstleistungsanbieters ausgestattet sind, um mindestens einen Teil der Kommunikation zwischen Zugangsanbieter und Dienstleistungsanbieter sicherzustellen.

4. Vorrichtung nach einem der Ansprüche 1 bis 3, wobei die Dienstleistung verrechenbare herunterladbare Objekte umfasst.

5. Vorrichtung nach Anspruch 4, wobei der Zugangsverwalter ausgestattet ist, um eine Solvenz, die mit dem Benutzer/Endgerät assoziiert ist, in Bezug auf Kosten zu verifizieren, die mit dem Erhalt der Dienstleistung oder den herunterladbaren Objekten oder einer Kombination von beiden assoziiert sind, und um nur nach positiver Solvenzverifikation Zugang zum Dienstleistungsanbieter ermöglicht.

6. Vorrichtung nach Anspruch 4, wobei der Zugangsverwalter ausgestattet ist, um eine Dienstleistung oder verrechenbare herunterladbare Objekte oder eine Kombination von beiden zu erhalten, und um eine Solvenz, die mit dem Benutzer/Endgerät assoziiert ist, in Bezug auf Kosten zu verifizieren, die mit dem Erhalt der Dienstleistung oder den verrechenbaren herunterladbaren Objekten oder einer Kombination von beiden assoziiert sind, und um nur nach positiver Solvenzverifikation den Inhalt dem Benutzer weiterzugeben.

7. Vorrichtung nach Anspruch 5 oder 6, wobei der Zugangsverwalter ausgestattet ist, um einen Abrechnungseintrag zur Verrechnung der Kosten nach positiver Verifikation der Solvenz, die mit dem Benutzer assoziiert ist, zu generieren.

8. Vorrichtung nach Anspruch 7, wobei der Zugangsverwalter ausgestattet ist, um zu verifizieren, ob die angefragte Dienstleistung oder die verrechenbaren herunterladbaren Objekte oder eine Kombination von beiden durch den Dienstleistungsanbieter dem Zugangsverwalter oder dem Benutzer/Endgerät geliefert wurden, und um den Abrechnungseintrag nur nach Bestätigung der Lieferung zu generieren.

9. Vorrichtung nach Anspruch 8, wobei der Zugangsanbieter einen Speicher (240) zur Speicherung von elektronischem Inhalt beinhaltet, der durch einen Dienstleistungs-Anbieter als Antwort auf eine Dienstleistungsanfrage eines Benutzers/Endgerätes für weiterführende Versorgung des Benutzers/Endgerätes geliefert worden ist; wobei der Zugangsverwalter ausgestattet ist, um die Lieferung an den Benutzer nach einem Versagen des Erhalts des elektronischen Inhalts durch den Benutzer/Endgerät bei einem ersten Versuch zu wiederholen.

10. Vorrichtung nach einem der Ansprüche 4 bis 9, wobei der Zugangsverwalter ausgestattet ist, um eine Solvenz zu verifizieren, die mit dem Benutzer/Endgerät in Abhängigkeit von einer Art des Benutzers assoziiert ist, wobei jede Art mit unterschiedlichen Abrechnungsdaten oder einem Netzwerkbetreiber oder einer Kombination von beiden assoziiert ist.

11. Vorrichtung nach Anspruch 10, wobei die Art des Kunden mindestens einen Prepaid-Kunden und einen Postpaid-Kunden beinhaltet.

12. Vorrichtung nach einem der vorhergehenden Ansprüche, wobei der Benutzer/Endgerät mit Identifikationsinformation assoziiert ist, welche in mindestens einer Anfragenachricht zu einem Dienstleistungsanbieter enthalten ist, um es dem Dienstleistungsanbieter zu ermöglichen, die Dienstleistung dem Benutzer/Endgerät zur Verfügung zu stellen; wobei der Zugangsanbieter umfasst:
einen Speicher (240) zur Speicherung der assoziierten fiktiven Identifikationsinformation von jedem Benutzer/Endgerät; und
einen Identifikationskonverter (260) zur Ersetzung der Identifikationsinformation in einer Dienstleistungs-Anfragenachricht vom Benutzerendgerät mit einer entsprechenden fiktiven Identifikation-Information, die zum Dienstleistungs-Anbieter weitergeleitet wird, und zur Ersetzung der fiktiven Identifikationsinformation durch die entsprechende Benutzer/Endgerätsinformation in einer Dienstleistungs-Antwortnachricht vom Dienstleistungs-Anbieter.

13. Vorrichtung nach Anspruch 12, wobei die Benutzer/Endgerät-Identifikationsinformation von mindestens einer aktuellen Netzwerkadresse umfasst oder abgeleitet ist, wie eine IP-Adresse oder MSISDN, die das Benutzerendgerät mit Bezug zum Grossraumnetzwerk (140) und/oder zu anderen Kommunikationsvorrichtungen (170, 180) eindeutig identifiziert und wobei die entsprechende fiktive Identifikationsinformation eine unterschiedliche eindeutige Netzwerkadresse beinhaltet, die nicht als gegenwärtige Netzwerkadresse durch irgendeines der Benutzerendgeräte verwendet wird.

14. Vorrichtung nach einem der vorhergehenden Ansprüche, wobei der Dienstleistungsanbieter ausgestattet ist, um
eine Nachricht, nachfolgend "Cookie", mit Daten, die sich auf einen vorhergehenden Zugriff auf den Dienstleistungsanbieter durch ein Benutzerendgerät beziehen, zu generieren;
das Cookie zum Benutzerendgerät zu senden, und
für eine nachfolgende Dienstleistungsanfrage das Cookie vom Benutzerendgerät zu erhalten, um einen personalisierten weiteren Dienst bereitzustellen;
wobei der Zugangsanbieter einen Speicher (240) zur Speicherung von Cookies beinhaltet, die durch einen Dienstleistungsanbieter in Assoziation mit einem Benutzer/Endgerät gesendet wurden, und für eine Anfrage von einem Benutzer/Endgerät für eine Dienstleistung eines Dienstleistungsanbieter, der das Cookie des Benutzers/Endgerätes dem Dienstleistungsanbieter zur Verfügung stellt.

15. Vorrichtung nach Ansprüchen 10 und 14, wobei das Cookie im Zusammenhang mit den fiktiven Identifikationsinformationen, die mit einem Benutzer/Endgerät assoziiert ist, gespeichert werden.

16. Vorrichtung nach Ansprüchen 14 und 13, wobei das Cookie in Assoziation mit einer Benutzeridentität gespeichert wird, um es einem mit der Benutzeridentität assoziierten Benutzer zu ermöglichen, dieselben personalisierten Dienstleistungen, unabhängig von einem Benutzerendgerät, das durch den Benutzer verwendet wird, zu erhalten.

17. Vorrichtung nach einem der vorhergehenden Ansprüche, wobei die Dienstleistung mit virtuellen Dienstleistungsidentifikationsinformationen, wie eine URL, assoziiert ist, die in mindestens einer Anfragenachricht von einem Benutzerendgerät zu einem Dienstleistungsanbieter enthalten ist, um die Dienstleistung zu identifizieren; wobei der Zugangsanbieter beinhaltet:
einen Speicher zur Speicherung einer assoziierten tatsächlichen Dienstleistungsidentifikationsinformation für jede Dienstleistung, um die Dienstleistung in Bezug auf das Grossraumnetzwerk zu identifizieren; und
ein URL-Umschreiber (270) zur Ersetzung der virtuellen Dienstleistungsidentifikationsinformation in der Anfragenachricht des Benutzerendgerätes mit der entsprechenden tatsächlichen Dienstleistungsidentifikationsinformation für die Weiterleitung zum Dienstleistungsanbieter und zur Ersetzung der tatsächlichen Dienstleistungsidentifikationsinformationen durch die entsprechenden virtuellen Dienstleistungsidentifikationsinformationen in einer Nachricht vom Dienstesleistungsanbieter zum Benutzerendgerät

18. Vorrichtung nach Anspruch 17, wobei der Zugangsanbieter ausgestattet ist, um Anfragenachrichten für Dienstleistungen, die mit virtueller Dienstleistungsidentifikationsinformation assoziiert sind, zu oder von einem Dienstleistungsanbieter zu identifizieren und um diese Nachrichten durch den URL-Umschreiber zu leiten.

19. Vorrichtung nach Anspruch 18, wobei der Zugangsanbieter ausgestattet ist, um den Unterschied eines vorbestimmten Musters in der virtuellen Dienstleistungsidentifikationsinformation zu machen.

20. Vorrichtung nach Anspruch 17, 18 oder 19, wobei der URL-Umschreiber ausgestattet ist, um Parameter in der Anfragenachricht vom Benutzerendgerät zum Dienstleistungsanbieter hinzuzufügen, um es dem Dienstleistungsanbieter zu ermöglichen, die Dienstleistung für den Benutzer/Endgerät zu optimieren.

21. Vorrichtung nach einem der vorhergehenden Ansprüche, wobei die Vorrichtung einen Lokalisierer beinhaltet, um Informationen bezüglich der Position des Benutzers/Endgeräts abzufragen, um es dem Dienstleistungsanbieter zu ermöglichen, positionsabhängige Dienstleistungen anzubieten.

22. Vorrichtung nach Anspruch 21, wobei der Zugangsanbieter einen Lokalisierer beinhaltet.

23. Vorrichtung nach Ansprüchen 20 und 21, wobei der URL-Umschreiber ausgestattet ist, um Positionsinformationen als einen Parameter in der Anfragenachricht vom Benutzerendgerät zum Dienstleistungsanbieter hinzuzufügen.

24. Dienstleistungszugangsanbieter-Untervorrichtung beinhaltend eine Kommunikationsschnittstelle (210, 220) zur Kommunikation mit mindestens einem Dienstleistungsanbieter (110, 120, 130) über ein Grossraumnetzwerk (140), insbesondere das Internet, und zur Kommunikation mit mindestens einem Benutzerendgerät (150, 160) über eine weitere Kommunikationsvorrichtung (170, 180), wobei die Dienstleistungszugangsanbieter-Untervorrichtung einen Dienstleistungszugangsverwalter (230) beinhaltet, der ausgestattet ist, um zu verifizieren, ob ein Benutzerendgerät oder ein Benutzer eines Benutzerendgerätes autorisiert ist, eine Dienstleistung von einem Dienstleistungsanbieter anzufragen und es nach positiver Verifikation dem Benutzerendgerät zu ermöglichen, auf den Dienstleistungsanbieter zuzugreifen, wobei der Dienstleistungsanbieter von der Autorisierung des Benutzers/Endgeräts entlastet wird.

25. Dienstleistungszugangsanbieter-Untervorrichtung nach Anspruch 24 zur Verwendung in einer Vorrichtung, wie in einem der Ansprüche 1 bis 23 beansprucht.

26. Verfahren zur Bereitstellung von Dienstleistungen für ein Benutzerendgerät über ein Grossraumnetzwerk, insbesondere das Internet, beinhaltend:
Empfangen einer Nachricht durch das Benutzerendgerät vom Dienstleistungsanbieter bei einer Dienstleistungszugangsanbieter-Untervorrichtung über eine weitere Kommunikationsvorrichtung;
Verifizieren durch besagte Dienstleistungszugangsanbieter-Untervorrichtung, ob das Benutzerendgerät oder ein Benutzer des Benutzerendgerätes autorisiert ist, eine Dienstleistung vom Dienstleistungsanbieter anzufragen; und
nach positiver Verifikation, es dem Benutzerendgerät zu ermöglichen, auf den Dienstleistungsanbieter über das Grossraumnetzwerk zuzugreifen, wobei der Dienstleistungsanbieter von der Autorisierung des Benutzers/Endgeräts entlastet wird.

27. Computerprogrammprodukt, wenn es auf einem Computer ausgeführt wird, zur Bewirkung der Ausführung der Schritte von Anspruch 26 auf einem Prozessor.

## Revendications

1. Système pour fournir des services à un terminal utilisateur (150, 160) ; le système comprenant :
au moins un sous-système de fournisseur de services/contenus (110, 120, 130), ci-après « fournisseur de services », pour fournir des services par l'intermédiaire d'un réseau étendu (140), en particulier Internet, incluant une interface de communication pour communiquer avec le réseau étendu ;
au moins un sous-système de fournisseur d'accès à des services (100), ci-après « fournisseur d'accès », incluant une interface de communication (210, 220) pour communiquer avec le au moins un fournisseur de services par l'intermédiaire du réseau étendu (140) et pour communiquer avec au moins un terminal utilisateur par l'intermédiaire d'un autre système de communication (170, 180) ; et
au moins un terminal utilisateur (150, 160) incluant une interface de communication pour communiquer avec le fournisseur d'accès via l'autre système de communication et, par l'intermédiaire du fournisseur d'accès, demander des services auprès du au moins un fournisseur de services ;
dans lequel le fournisseur d'accès inclut un gestionnaire d'accès aux services (230) pour vérifier si un terminal utilisateur ou un utilisateur d'un terminal utilisateur, ci-après « utilisateur/terminal », est autorisé à demander un service à un fournisseur de services et, après une vérification positive, permettre au terminal utilisateur d'accéder au fournisseur de services, libérant ainsi le fournisseur de services d'avoir à autoriser 1' (le) utilisateur/terminal.

2. Système selon la revendication 1, dans lequel le gestionnaire d'accès est adapté pour exécuter une opération de connexion de l'utilisateur du terminal utilisateur et, après l'opération de connexion réussie, commencer une session de communication permettant un accès vérifié du terminal utilisateur au fournisseur de services durant la session.

3. Système selon la revendication 1 ou 2, dans lequel la première interface de communication du fournisseur d'accès et l'interface de communication du fournisseur de services sont adaptées pour sécuriser au moins une partie de la communication entre le fournisseur d'accès et le fournisseur de services.

4. Système selon l'une quelconque des revendications 1 à 3, dans lequel le service comprend des objets téléchargeables facturables.

5. Système selon la revendication 4, dans lequel le gestionnaire d'accès est adapté pour vérifier une solvabilité associée à l' (au) utilisateur/terminal concernant les coûts liés à l'obtention du service ou des objets téléchargeables facturables ou une combinaison des deux et, uniquement après une vérification positive de la solvabilité, permettre un accès au fournisseur de services.

6. Système selon la revendication 4, dans lequel le gestionnaire d'accès est adapté pour recevoir un service ou des objets téléchargeables facturables ou une combinaison des deux à partir d'un fournisseur de services et pour vérifier une solvabilité associée à l' (au) utilisateur/terminal concernant les coûts liés à la réception du service ou des objets téléchargeables facturables ou une combinaison des deux et, uniquement après une vérification positive de la solvabilité, transmettre le contenu au terminal utilisateur.

7. Système selon la revendication 5 ou 6, dans lequel le gestionnaire d'accès est adapté pour générer un enregistrement de facturation pour facturer les coûts après une vérification positive de la solvabilité associée à l'utilisateur.

8. Système selon la revendication 7, dans lequel le gestionnaire d'accès est adapté pour vérifier si le service demandé ou les objets téléchargeables facturables ou une combinaison des deux ont été fournis par le fournisseur de services au gestionnaire d'accès ou à l'(au) utilisateur/terminal et pour générer l'enregistrement de facturation uniquement après une confirmation de la livraison.

9. Système selon la revendication 8, dans lequel le fournisseur d'accès comprend une mémoire (240) pour stocker un contenu électronique fourni par un fournisseur de services en réponse à une demande de service d'un utilisateur/terminal pour le transmettre à l'(au) utilisateur/terminal ; le gestionnaire d'accès étant adapté pour répéter une livraison à l'utilisateur en cas d'échec de récupération du contenu électronique par l'(1e) utilisateur/terminal lors d'une première tentative.

10. Système selon les revendications 4 à 9, dans lequel le gestionnaire d'accès est adapté pour vérifier une solvabilité associée à l'(au) utilisateur/terminal en fonction d'un type d'utilisateur associé chacun à des données de facturation différentes ou d'un opérateur réseau ou d'une combinaison des deux ;

11. Système selon la revendication 10, dans lequel le type de client comprend au moins un client avec prépaiement et un client avec postpaiement.

12. Système selon l'une quelconque des revendications précédentes, dans lequel l' (le) utilisateur/terminal est associé à des informations d'identification qui sont incluses dans au moins un message de requête à un fournisseur de services pour permettre au fournisseur de services de fournir le service à l'(au) utilisateur/terminal, le fournisseur d'accès comprenant :
une mémoire (240) pour stocker pour chaque utilisateur/terminal des informations d'identification fictives associées ; et
un convertisseur d'identité (260) pour remplacer dans un message de demande de service envoyé par le terminal utilisateur les informations d'identification par des informations d'identification fictives correspondantes transmises au fournisseur de services et pour remplacer dans un message de réponse de service envoyé par le fournisseur de services les informations d'identification fictives par les informations d'identification d'(de) utilisateur/terminal correspondantes.

13. Système selon la revendication 12, dans lequel les informations d'identification d'(de) utilisateur/terminal incluent ou sont dérivées d'au moins une adresse de réseau réelle, telle qu'une adresse IP ou un numéro RNIS de station mobile, identifiant de manière unique le terminal utilisateur vis-à-vis du réseau étendu (140) et/ou de l'autre système de communication (170, 180), et dans lequel les informations d'identification fictives correspondantes incluent une adresse de réseau unique différente qui n'est utilisée comme adresse de réseau réelle par aucun des terminaux utilisateur.

14. Système selon l'une quelconque des revendications précédentes, dans lequel le fournisseur de services est adapté pour :
générer un message, ci-après « cookie », avec des données relatives à un accès précédent au fournisseur de services par un terminal utilisateur ;
envoyer le cookie au terminal utilisateur, et
pour une demande de service subséquente, obtenir le cookie à partir du terminal utilisateur pour fournir un autre service personnalisé ;
le fournisseur d'accès incluant une mémoire (240) pour stocker les cookies envoyés par un fournisseur de services en association avec un utilisateur/terminal et pour une requête d'un utilisateur/terminal pour un service d'un fournisseur de services transmettant le cookie de l' (du) utilisateur/terminal au fournisseur de services.

15. Système selon les revendications 10 et 14, dans lequel le cookie est stocké en association avec les informations d'identification fictives associées à un utilisateur/terminal.

16. Système selon les revendications 14 et 13, dans lequel le cookie est stocké en association avec une identité d'utilisateur pour permettre à un utilisateur associé à l'identité d'utilisateur d'obtenir les mêmes services personnalisés indépendamment d'un terminal utilisateur utilisé par l'utilisateur.

17. Système selon l'une quelconque des revendications précédentes, dans lequel le service est associé à des informations d'identification de service virtuelles, telles qu'une URL, qui sont incluses dans au moins un message de requête envoyé par un terminal utilisateur à un fournisseur de services pour identifier le service ; le fournisseur d'accès comprenant :
une mémoire pour stocker pour chaque service des informations d'identification de service réelles associées pour identifier le service vis-à-vis du réseau étendu ; et
un éditeur d'URL (270) pour remplacer dans le message de requête envoyé par le terminal utilisateur les informations d'identification de service virtuelles par les informations d'identification de service réelles correspondantes afin de les transmettre au fournisseur de services et pour remplacer dans un message envoyé par le fournisseur de services au terminal utilisateur les informations d'identification de service réelles par les informations d'identification de service virtuelles correspondantes.

18. Système selon la revendication 17, dans lequel le fournisseur d'accès est adapté pour identifier des messages de requête pour des services associés à des informations d'identification de service virtuelles envoyés ou reçus à/depuis un fournisseur de services, et pour diriger ces messages par l'intermédiaire de l'éditeur d'URL.

19. Système selon la revendication 18, dans lequel le fournisseur d'accès est adapté pour faire la distinction selon un schéma prédéterminé dans les informations d'identification de service virtuelles.

20. Système selon la revendication 17, 18, ou 19, dans lequel l'éditeur d'URL est adapté pour ajouter des paramètres dans le message de requête envoyé par le terminal utilisateur au fournisseur de services pour permettre au fournisseur de services d'optimiser le service pour l' (le) utilisateur/terminal.

21. Système selon l'une quelconque des revendications précédentes, dans lequel le système inclut un localiseur pour récupérer des informations sur un emplacement d'un utilisateur/terminal pour permettre au fournisseur de services de fournir un service dépendant de l'emplacement à un utilisateur/terminal.

22. Système selon la revendication 21, dans lequel le fournisseur d'accès inclut le localiseur.

23. Système selon les revendications 20 et 21, dans lequel l'éditeur d'URL est adapté pour ajouter des informations d'emplacement comme paramètres dans le message de requête envoyé par le terminal utilisateur au fournisseur de services.

24. Sous-système de fournisseur d'accès à des services comprenant une interface de communication (210, 220) pour communiquer avec au moins un fournisseur de services (110, 120, 130) par l'intermédiaire d'un réseau étendu (140), en particulier Internet, et pour communiquer avec au moins un terminal utilisateur (150, 160) par l'intermédiaire d'un autre système de communication (170, 180), dans lequel le sous-système de fournisseur d'accès à des services comprend un gestionnaire d'accès aux services (230) adapté pour vérifier si un terminal utilisateur ou un utilisateur d'un terminal utilisateur est autorisé à demander un service auprès d'un fournisseur de services et, après une vérification positive, permettre au terminal utilisateur d'accéder au fournisseur de services, libérant ainsi le fournisseur de services d'avoir à autoriser l'(le) utilisateur/terminal.

25. Sous-système de fournisseur d'accès à des services selon la revendication 24 servant dans un système selon l'une quelconque des revendications 1 à 23.

26. Procédé pour fournir des services à un terminal utilisateur par l'intermédiaire d'un réseau étendu, en particulier Internet, comprenant :
recevoir au niveau d'un sous-système de fournisseur d'accès à des services, par l'intermédiaire d'un autre système de communication, à partir du terminal utilisateur un message demandant un service à un fournisseur de services ;
vérifier par ledit sous-système de fournisseur d'accès à des services si le terminal utilisateur ou un utilisateur du terminal utilisateur est autorisé à demander un service au fournisseur de services ; et
après une vérification positive, permettre au terminal utilisateur d'accéder au fournisseur de services par l'intermédiaire du réseau étendu, libérant ainsi le fournisseur de services d'avoir à autoriser l'(1e) utilisateur/terminal.

27. Produit de programme informatique qui, lorsqu'il est exécuté sur un ordinateur, amène un processeur à exécuter les étapes de la revendication 26.
